# EUROPEAN PATENT SPECIFICATION

(11) **EP 2 392 737 B1**
(45) Date of publication and mention of the grant of the patent: **03.05.2017**
(21) Application number: 11168769.5
(22) Date of filing: 06.06.2011
(51) Int. Cl.: E03C 1/02

(54) **Connector device**
Steckverbindervorrichtung
Dispositif de connecteur

(30) Priority: 04.06.2010 GB 201009389
(43) Date of publication of application: 07.12.2011
(73) Proprietor: Adey Holdings (2008) Limited, Cheltenham Gloucestershire GL51 8NR (GB)
(72) Inventor: Adey, Christopher, Cheltenham, Gloucestershire GL52 6PA (GB)
(74) Representative: Games, Robert Harland

(56) References cited:
- DE-U1- 29 719 849
- GB-A- 2 230 069

## Description

The present invention relates to a hose connector device and particularly to a connector device for use in plumbing.

### BACKGROUND OF THE INVENTION

When a central heating circuit has been in operation for some time, there is a tendency for magnetite to build up as a sludge, which settles in the system, for example, in the radiators, pipe work and boiler heat exchanger. This leads to a number of problems including cold spots in the radiators, reduced heat transfer in the heat exchanger of the boiler resulting in slower warm up time, increased noise in the system and pump failure. Furthermore, in hard water areas there is a tendency for limescale to accumulate in the heat exchanger, which also reduces the efficiency of the boiler.

In order to remove the sludge and loose limescale deposits and restore the system to its optimum operating condition, it is known to flush the sludge and deposits from the system in a process known as "power flushing", also known as "jet flushing and hard flushing". Power flushing involves the connection of a pump to the system, which pumps water at a high velocity and pressure through the system, to loosen and mobilise corrosion and limescale deposits, and to suspend them in rapidly moving water. Sometimes, specialist cleansing chemicals are added to the water to improve the effectiveness of the cleaning process. Once loosened, the unwanted debris is purged from the system with the flow of clean water.

A new method of flushing a central heating system is proposed in the applicant's copending European Patent Application Number 11168590.5, but irrespective of how a central heating system is flushed, it is necessary to interrupt the central heating circuit to connect the flushing hoses. Until now, this has usually been achieved by removing the pump from the system, if the pump is mounted externally of the boiler, and connecting the hoses to the pump connections. In one alternative, a magnetic filter may be removed and the hoses connected to the filter connections. In another alternative, a plumber breaks the circuit and installs tee-pieces with valves. A problem of these methods is that they are time consuming and can result in leaks when the system is re-assembled. In some cases, re-assembly will require new components to be fitted. DE29719849U discloses a device for keeping plumbing connections in position during plastering work. The device includes a pair of connectors, pivotally mounted to a common anchor.

It is an object of the invention to provide a connector device which reduces or substantially obviates the above mentioned problems.

### SUMMARY OF THE INVENTION

According to a first aspect of the invention there is provided a hose connector device according to claim 1.

The hose connector device is advantageous because the central longitudinal axes of the connector bodies can be arranged to lie in-line with the centres of existing connections for a particular make, type or brand of plumbing device, enabling removal of the device and simplistic connection to the connections for that device.

The pivot enables the connectors to be fitted to a number of products with different centre connections in the same product or brand line.

First and second spacer elements may extend from the respective connectors and may be connected together at the pivot. The axis of the pivot may be parallel with the central longitudinal axes of the connector bodies. The or each spacer may be connected to the body of a respective connector. The or each spacer may be integrally formed with the body. Most preferably, each connector body is mounted for rotation within the respective tubular housing, in bearings.

Each connector may include a threaded region at the first end for connection to a corresponding threaded connector.

The threaded region may be a male threaded portion. Alternatively the threaded portion may be a female thread.

The diameter of the first threaded end may be 20mm (1/2" British Standard Pipe (BSP)), 25mm (3/4" BSP), 32mm (1"BSP) or any other standard fitting size. An adapter may be provided for attachment to the first end for allowing connection to a thread of a different size. The hose connection means may be formed by a portion of the periphery of the second end being tapered and stepped for providing secure engagement with a hose.

Alternatively, a distal end of the elbow may be provided as one part of a push fit connector. The first end may also be provided as a push fit connector.

At least one of the connectors may be made from brass, plastics or reinforced plastics.

### BRIEF DESCRIPTION OF THE DRAWINGS

For a better understanding of the present invention, and to show more clearly how it may be carried into effect, reference will now be made, by way of example, to the accompanying drawings, in which:
Figure 1 shows a schematic perspective view of first embodiment of a hose connector device; and
Figure 2 shows a schematic plan view from above of a second embodiment of the hose connector device with the connectors disposed at 40 degrees relative to one-another.

### DETAILED DESCRIPTION OF THE ILLUSTRATIVE EMBODIMENTS

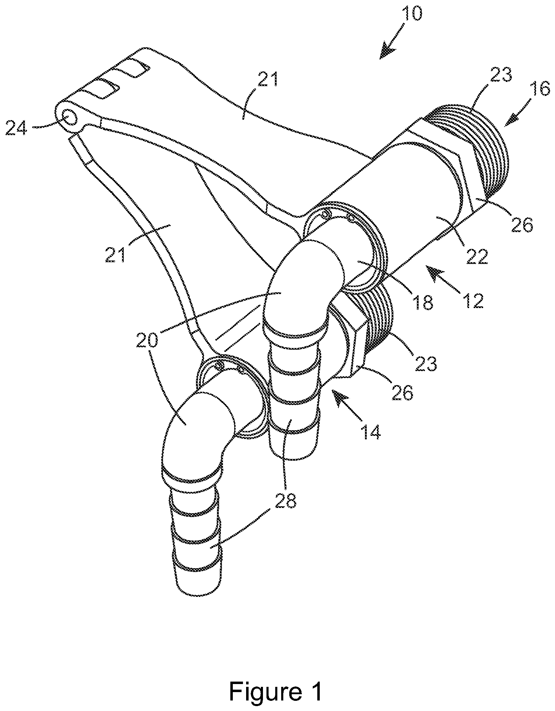

Referring firstly to Figure 1, a hose connector device is indicated generally at 10. The hose connector device 10 has a first connector 12 and a second connector 14, with each first and second connector having a first end 16, a body 18 and a second end 20. The central axis of the first connector body is arranged in parallel with the central axis of the second connector body. The first ends 16 are preferably formed integrally with the bodies 18 of the connectors 12, 14.

The first and second connectors 12, 14 are linked together by a pair of spacer elements 21. One end of the spacer elements 21 are connected together in the manner of a hinge about a central pivot pin 24.

A tubular housing 22 is provided at the other end, the free end, of each spacer element. Each respective spacer element 21 is integrally formed with the tubular housing 22 but may alternatively be formed by a separate component, as desired. The respective body 18 of each connector 12, 14, is mounted for rotation within its respective tubular housing, for example, in a ball race or other bearing assembly. Alternatively, each tubular housing 22 may itself form a respective body 18 of a connector 12, 14 and may be moveable relative to the first 16 and/or second ends 20.

The first end 16 of each connector 12, 14 is formed as a male screw thread (not shown) for connection with a corresponding female thread. An adaptor 23, with an internal female thread, is screwed onto the male thread of the first end 16. The adaptor 23 comprises a hexagon nut 26 formed integrally with a shank having an external male thread. An O-ring seal is received in a slot of an end face of the adapter 23, at the hexagon end. When the adaptor 23 is mounted on the first end 16, it is rotated until the O-ring seal is compressed against the end of the tubular housing 22. The adaptor 23 facilitates connection of a range of threaded components to the connector 12, 14.

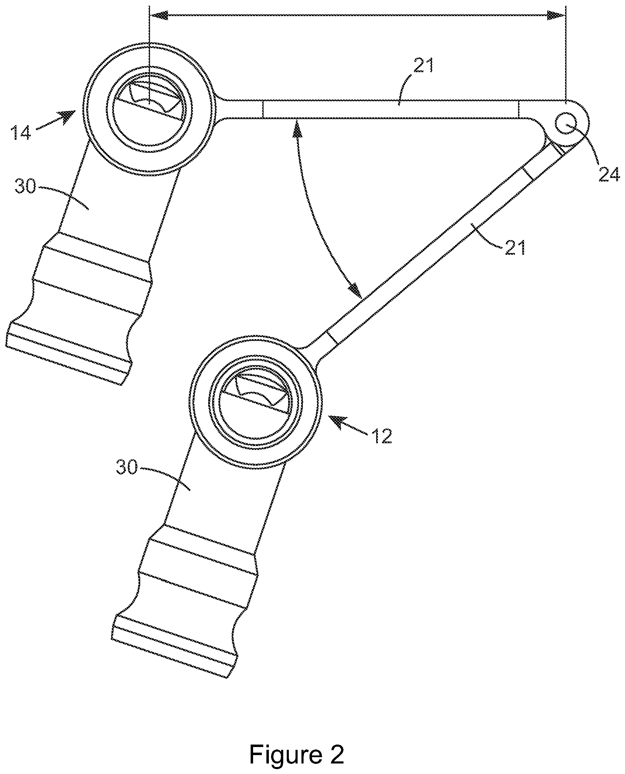

Whereas the diameter of the male screw thread formed on the first end 16 is typically fixed, for example, 25mm (¾ " BSP) thread, the diameter of the male screw thread on the adaptor 23 may be one of a number of diameters as required. Ideally, the adaptor 23 threads are standard sizes to correspond with connections for standard piping size connectors eg 20mm (1/2" BSP), 25mm (3/4" BSP), or 32mm (1" BSP) threads. It will be appreciated that other sizes can be utilised as appropriate. The male screw threaded portions may optionally be female threaded portions and vice versa. The second end 20 of each connector 12, 14 is formed as a 90° elbow. The distal portion 28 of each elbow is tapered and stepped to be received in the end of a hose, for example, for flushing. The ability to rotate the connector bodies allows for desired angular positioning of the ends, in particular, the relative positioning of the elbows 28. In an alternative arrangement, as shown in Figure 2, the distal portion 30 of each connector 12, 14 is provided as a push-fit connector. Any other suitable connection can be provided, as desired, insofar the second end formed as the 90 degree elbow is provided with hose connection means. For example, in use a hose connector, having at one end a tapered and stepped region for receiving a hose, may be mounted on the push-fit connector and locked into place with a cam lock arrangement. A hose may then be mounted on the hose connector.

The hose device is ideally made from brass, but may be made from plastics or from reinforced plastics or a combination of these materials.

In use, it is envisaged that the hose connector device 10 will be used to connect to connections intended for another product in a brand line, for example, a magnetic filter. The filter for example can be removed from a central heating circuit and the connector device 10 can conveniently be fitted to the open connections. The flexibility of the hinged spacer elements 21 enables the spacing of the connectors 12, 14 to be varied, by angular movement of the spacer elements 21 about the pivot 24. The rotational connection of the spacer elements 21 to the second 20 ends enables the orientation of the connectors 12, 14 to be selected irrespective of the position or spacing of the connectors 12, 14. In other words, the distal portions 28, 30 of the elbows can be aligned parallel to receive respective hoses, irrespective of the position of the spacer elements 21.

The invention is advantageous because it can be used for simplistic interruption of a plumbing circuit, for example for connection of hoses or other devices.

## Claims

1. A hose connector device (10) for use in plumbing, comprising at least two connectors (12, 14), each connector having a body (18) through which fluid can flow, a first end (16) having connection means for fluidly connecting the body to open connections of a heating circuit where another product, for example a magnetic filter, has been removed, and a second end (20) formed as a 90 degree elbow and having hose connection means (28) for fluidly connecting the body to a hose, in which central longitudinal axes of the connector bodies (18) are arranged parallel with one-another and the positions of the connectors are linked together about a pivot (24).

2. A hose connector device (10) as claimed in claim 1, in which the axis of the pivot (24) is parallel with the central longitudinal axes of the connector bodies (18).

3. A hose connector device (10) as claimed in claim 2, in which first and second spacer elements (21) extend from the respective connectors (12, 14) and are connected together at the pivot (24).

4. A hose connector device (10) as claimed in claim 3, in which first and second tubular housings (22) are disposed at respective free ends of the first and second spacers (21).

5. A hose connector device (10) as claimed in claim 4, in which the first and second spacer elements (21) are integrally formed with the respective first and second tubular housings (22).

6. A hose connector device (10) as claimed in claim 5, in which each connector body (18) is mounted for rotation within the respective tubular housing (22).

7. A hose connector device (10) as claimed in claim 6, in which each connector body (18) is mounted within a bearing mounted in the respective tubular housing (22).

8. A hose connector device (10) as claimed in any preceding claim, in which each connector (12, 14) includes a threaded region at the first end for connection to a corresponding threaded connector (23).

9. A hose connector device (10) as claimed in claim 8, in which the threaded region is a male threaded portion.

10. A hose connector device (10) as claimed in claim 8, in which the diameter of the first end is substantially 25mm (¾ " BSP).

11. A hose connector device (10) as claimed in any one of claims 8 to 10, in which an adapter (23) is provided for attachment to the threaded region of the first end (16), the adapter (23) having a further threaded region of the same or different size.

12. A hose connector device (10) as claimed in claim 11, in which a threaded portion of the adaptor has a diameter of approximately 20mm (1/2" BSP), 25mm (3/4" BSP) or 32mm (1" BSP).

13. A hose connector device (10) as claimed in any preceding claim, in which a portion of the periphery of the second end (20) is tapered and stepped for providing secure engagement with a hose.

14. A hose connector device (10) as claimed in any one of claims 1 to 10, in which a distal end of the elbow (28) and/or the first end (16) is provided as one part of a push fit connector.

## Patentansprüche

1. Schlauchverbindervorrichtung (10) zur Verwendung in Rohrleitungen, die mindestens zwei Verbinder (12, 14) umfasst, wobei jeder Verbinder über einen Körper (18) verfügt, durch den Flüssigkeit fließen kann, über ein erstes Ende (16) mit Verbindungsmitteln zum fluidmäßigen Anschluss des Körpers an offene Verbindungen eines Heizkreises verfügt, in dem ein anderes Produkt, zum Beispiel ein Magnetfilter, entfernt wurde, und über ein zweites Ende (20) verfügt, das als Kniestück zu 90 Grad gebildet ist und über Schlauchverbindungsmittel (28) zum fluidmäßigen Anschluss des Körpers an einen Schlauch verfügt, in dem zentrale Längsachsen der Verbinderkörper (18) zueinander parallel angeordnet sind und die Positionen der Verbinder über ein Gelenk (24) miteinander verknüpft sind.

2. Schlauchverbindervorrichtung (10) nach Anspruch 1, in dem die Achse des Gelenks (24) parallel mit der zentralen Längsachse des Verbinderkörpers (18) ist.

3. Schlauchverbindervorrichtung (10) nach Anspruch 2, in der sich das erste und zweite Abstandselement (21) vom jeweiligen Verbinder (12, 14) erstrecken und am Gelenk (24) miteinander verbunden sind.

4. Schlauchverbindervorrichtung (10) nach Anspruch 3, in der das erste und zweite rohrförmige Gehäuse (22) am jeweiligen freien Ende des ersten und zweiten Abstandshalters (21) angeordnet sind.

5. Schlauchverbindervorrichtung (10) nach Anspruch 4, in der das erste und zweite Abstandselement (21) integral mit dem jeweiligen ersten und zweiten rohrförmigen Gehäuse (22) gebildet sind.

6. Schlauchverbindervorrichtung (10) nach Anspruch 5, in der jeder Verbinderkörper (18) zur Rotation im jeweiligen röhrenförmigen Gehäuse (22) montiert ist.

7. Schlauchverbindervorrichtung (10) nach Anspruch 6, in der jeder Verbinderkörper (18) in einem an das jeweilige röhrenförmige Gehäuse (22) montierten Lager montiert ist.

8. Schlauchverbindervorrichtung (10) nach vorstehenden Ansprüchen, in der jeder Verbinder (12, 14) am ersten Ende einen Gewindebereich zur Verbindung an einen entsprechenden Gewindeverbinder (23) enthält.

9. Schlauchverbindervorrichtung (10) nach Anspruch 8, in der jeder Gewindebereich ein Steckgewindeabschnitt ist.

10. Schlauchverbindervorrichtung (10) nach Anspruch 8, in der der Durchmesser des ersten Endes wesentlich 25 mm (¾" BSP) beträgt.

11. Schlauchverbindervorrichtung (10) gemäß Ansprüchen 8 bis 10, in der ein Adapter (23) für die Befestigung am Gewindebereich des ersten Endes (16) vorhanden ist, wobei der Adapter (23) über einen weiteren Gewindebereich mit der gleichen oder einer anderen Größe verfügt.

12. Schlauchverbindervorrichtung (10) nach Anspruch 11, in der ein Gewindeabschnitt des Adapters einen Durchmesser von etwa 20 mm (1/2" BSP), 25 mm (3/4" BSP) oder 32 mm (1" BSP) aufweist.

13. Schlauchverbindervorrichtung (10) nach vorstehenden Ansprüchen, in dem ein Abschnitt der Peripherie des zweiten Endes (20) zum sicheren Einrasten mit einem Schlauch verjüngt und gestuft ist.

14. Schlauchverbindervorrichtung (10) nach Ansprüchen 1 bis 10, in dem ein distales Ende des Kniestücks (28) und/oder des ersten Endes (16) als ein Teil eines Steckverbinders vorhanden ist.

## Revendications

1. Raccord de tuyau (10) pour des applications de plomberie, comprenant au minimum deux connecteurs (12, 14), chaque connecteur possédant un corps (18) à travers lequel peut s'écouler un liquide, un premier bout (16) étant doté d'un dispositif de raccordement permettant le raccordement par le fluide du corps avec des raccords ouverts d'un circuit de chauffage, lorsqu'un autre produit, par exemple un filtre magnétique, a été enlevé, et un deuxième bout (20) réalisé sous forme de coude à 90 degrés, et possédant un dispositif de raccordement du tuyau (28) pour effectuer le raccordement par le fluide du corps avec un tuyau flexible, dans lequel des axes longitudinaux centraux des corps de connecteur (18) sont agencés parallèlement entre eux, et les positions des connecteurs sont reliées l'une à l'autre autour d'un pivot (24).

2. Raccord de tuyau (10) selon la revendication 1, dans lequel l'axe du pivot (24) est parallèle aux axes longitudinaux centraux des corps de connecteur (18).

3. Raccord de tuyau (10) selon la revendication 2, dans lequel des premier et deuxième éléments d'espacement (21) s'étendent depuis les connecteurs respectifs (12, 14), et sont raccordés l'un à l'autre au pivot (24).

4. Raccord de tuyau (10) selon la revendication 3, dans lequel des premier et deuxième logements tubulaires (22) sont disposés aux bouts libres respectifs des premier et deuxième éléments d'espacement (21).

5. Raccord de tuyau (10) selon la revendication 4, dans lequel des premier et deuxième éléments d'espacement (21) sont formés de façon intégrale avec les premier et deuxième logements tubulaires (22) correspondants.

6. Raccord de tuyau (10) selon la revendication 5, dans lequel chaque corps de connecteur (18) est monté pour assurer la rotation au sein du logement tubulaire (22) correspondant.

7. Raccord de tuyau (10) selon la revendication 6, dans lequel chaque corps de connecteur (18) est monté dans un coussinet monté dans le logement tubulaire (22) correspondant.

8. Raccord de tuyau (10) selon une quelconque des revendications précédentes, dans lequel chaque connecteur (12, 14) comprend une zone filetée au premier bout pour le raccordement avec un connecteur fileté correspondant (23).

9. Raccord de tuyau (10) selon la revendication 8, dans lequel la zone filetée est une partie à filet mâle.

10. Raccord de tuyau (10) selon la revendication 8, dans lequel le diamètre du premier bout est substantiellement 25 mm (3/4" BSP).

11. Raccord de tuyau (10) selon une quelconque des revendications 8 à 10, comprenant un adaptateur (23) permettant le raccordement à la zone filetée du premier bout (16), l'adaptateur (23) étant doté d'une autre zone filetée de la même ou d'une autre taille.

12. Raccord de tuyau (10) selon la revendication 11, dans lequel une partie filetée de l'adaptateur mesure environ 20 mm (1/2" BSP), 25 mm (3/4" BSP) ou 32 mm (1" BSP) de diamètre.

13. Raccord de tuyau (10) selon une quelconque des revendications précédentes, dans lequel une partie du pourtour du deuxième bout (20) est conique et étagée pour assurer un assemblage fixe avec un tuyau flexible.

14. Raccord de tuyau (10) selon une quelconque des revendications 1 à 10, dans lequel une extrémité distale du coude (28) et/ou le premier bout (16) constitue une partie d'un connecteur à emboîtement.
